# EUROPEAN PATENT APPLICATION

(11) **EP 4 040 251 A1**
(43) Date of publication of application: **10.08.2022**
(21) Application number: 21155799.6
(22) Date of filing: 08.02.2021
(51) Int. Cl.: G05D 1/00

(54) **DRONE CONTROLLING DEVICE AND A DRONE**

(71) Applicant: Skycorp OÜ, 61702 Tartu county (EE)
(72) Inventor: Suvorov, Roman, 61702 Külitse (EE); Saarepera, Marchos, 60534 Vahi alevik (EE); Ots, Andri, 51007 Tartu (EE); Songi, Madis, 50303 Tartu (EE); Alliksoo, Marek, 61702 Külitse (EE); Meidla, Toomas, 50109 Tartu (FI)
(74) Representative: Aaltonen, Janne Lari Antero

(57) **Abstract**

A drone controlling device is provided that is connectable to an electrical system (102) of a drone (104, 302, 402, 502). The drone controlling device comprises a transponder (110) arranged to monitor surrounding airspace and a positioning module (112) configured to identify a location of the drone. The drone controlling device further comprises a cellular communication module (114) being configured to control the drone by communicating with a remote device and to communicate a location to the remote device. One or more data exchange modules (116) in the drone controlling device are arranged to store at least a unique identification code of the drone and exchange the unique identification code with the remote device. The drone controlling device further comprises a power switching unit (118) arranged to control a power unit of the drone remotely to reduce the power consumption of the drone.

## Description

### TECHNICAL FIELD

The present disclosure relates to a drone controlling device. Moreover, the present disclosure also relates to a drone that includes the drone controlling device.

### BACKGROUND

There is a rapid development of technologies in the field of drones, also called unmanned aerial vehicles. Drones are increasingly employed for various applications, such as time-sensitive product deliveries, surveillance etc. Energy consumption is a prominent constraint for drone delivery operations to achieve the full potential of the drones, for example, in providing fast and reliable delivery, reducing cost, and cutting emissions. Currently, some form of human interaction is always needed to manage the drones. Various drones (e.g., autonomous hydrogen drones, battery drones, internal combustion-powered drones, hybrid drones, and other unmanned aerial vehicles) need to be manually turned ON or OFF to preserve power (i.e., to save battery or fuel consumption) due to the common way they are used and operated. In addition to this, a drone's location cannot be tracked if it is not in a powered-on state. There have been several cases where airspace had to be suspended due to the drone losing communications or connectivity with a ground-based control station. Thus, a drone with a failure of propulsion (e.g., due to no power) or loss of communications, can result in a loss of the drone (i.e., a loss of a valuable asset) or can be a cause of nuisance for air traffic management. Thus, there exists a technical problem of how to save energy consumption of the drones when the drone is not airborne (i.e., not flying), enable fail-safe tracking, and full remote control of drones while reducing energy consumption by drones at the same time.

Existing drones, such as the battery drones or the internal combustion-powered drones, are incapable of saving power automatically. When the drone is not airborne, the typical option to save power is to switch OFF the drone manually. This requires that the drone operator or somebody else have to be in the same area of the drone to switch the drone OFF after the drone has landed. This reduces the drone operating lifetime. Batteries in general have short endurance and petrol engines, in addition to being environmentally unfriendly, require extensive maintenance, which also increases the cost of operation of drones. Currently, communication with a drone can only be established when the drone is in the powered-on state, which means that there is no way to track the drone when the drone is not in the powered-on state. In case of a Beyond Visual Line of Sight (BVLOS) drone incident, a user has to find it using another drone, employ manual labour, or simply hope for another passer-by to locate the drone, and find a way to contact the owner, which increases uncertainty and is undesirable.

Therefore, in light of the foregoing discussion, there exists a need to overcome the aforementioned drawbacks associated with the existing drones and their power control and communications systems.

### SUMMARY

The present disclosure seeks to provide a drone controlling device. The present disclosure also seeks to provide a drone that comprises the drone controlling device. An aim of the present disclosure is to provide a solution that overcomes at least partially the technical problems encountered in prior art.

In one aspect, an embodiment of the present disclosure provides a drone controlling device, the drone controlling device being connectable to an electrical system of a drone, the drone controlling device comprises a processor configured to control: a chargeable battery, a transponder, a positioning module, a cellular communication module, one or more data exchange modules and a power switching unit wherein when the drone controller device is in use: the transponder being arranged to monitor surrounding airspace and collect information; the positioning module being configured to identify a location of the drone; the one or more data exchange modules arranged to read at least a unique identification code of the drone; the cellular communication module configured to provide communication between the drone controlling device and one or more remote devices and to communicate the location of the drone, the unique identification code and information from the transponder to the one or more remote devices; and the power switching unit being arranged to control a power unit of the electrical system of the drone based on the communication from the one or more remote devices.

In another aspect, an embodiment of the present disclosure provides a drone comprising the drone controlling device.

Embodiments of the present disclosure substantially eliminate or at least partially address the problems in the prior art, and reduces the energy consumption of a drone when the drone is not airborne (i.e., not flying) by controlling the power unit of the drone remotely, improves the drone operating lifetime, and also provides a capability to remotely track and control the drone in a power-efficient manner even if the drone itself is not in the powered-on state.

Additional aspects, advantages, features and objects of the present disclosure would be made apparent from the drawings and the detailed description of the illustrative embodiments construed in conjunction with the appended claims that follow. It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is a block diagram of various components of a drone controlling device along with a drone, in accordance with an embodiment of the present disclosure;
FIG. 2 is a block diagram of various components of a drone controlling device, in accordance with another embodiment of the present disclosure;
FIG. 3 is a diagram of various components of a drone controlling device attached to a drone, in accordance with yet another embodiment of the present disclosure;
FIG. 4 is an illustration of an exemplary scenario of implementation of a drone controlling device for a drone, in accordance with an embodiment of the present disclosure; and
FIG. 5 is an illustration of an exemplary scenario of implementation of a drone controlling device for a drone, in accordance with another embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a drone controlling device, the drone controlling device being connectable to an electrical system of a drone comprises, the drone controlling device comprises a processor configured to control: a chargeable battery, a transponder, a positioning module, a cellular communication module, one or more data exchange modules and a power switching unit wherein when the drone controller device is in use: the transponder being arranged to monitor surrounding airspace and collect information; the positioning module being configured to identify a location of the drone; the one or more data exchange modules arranged to read at least a unique identification code of the drone; the cellular communication module configured to provide communication between the drone controlling device and one or more remote devices and to communicate the location of the drone, the unique identification code and information from the transponder to the one or more remote devices; and the power switching unit being arranged to control a power unit of the electrical system of the drone based on the communication from the one or more remote devices.

In another aspect, an embodiment of the present disclosure provides a drone comprising the drone controlling device.

The present disclosure provides the drone controlling device that improves the functioning of the drone such that the energy consumption of the drone is reduced. The chargeable battery, the transponder, the positioning module, the cellular communication module, one or more data exchange modules and the power switching unit are connected to the processor. As the power switching unit is arranged to control the power unit of the drone, the power unit, such as a battery, an internal combustion unit, a fuel cell, or a solar energy unit, or other power sources of the drone, can be remotely turned OFF or ON. This prevents any delay, which presently occurs in practice as a result of manual operation by a human operator to turn ON or OFF the drone manually. This avoids wastage of energy (e.g., petrol, electricity, or other fuel) when the drone is not airborne (i.e., not flying), resulting in reduced overall energy consumption of the drone. Moreover, the power unit of the drone can be remotely controlled even if the drone is not in a powered-on state. The drone controlling device thus not only improves the fuel efficiency of the drone but also improves the drone operating lifetime, and also provides a capability to remotely track and control the drone in a power-efficient manner even if the drone itself is not in the powered-on state.

Furthermore, the conventional off-the-shelf drones can be transformed and upgraded to advanced power-efficient drones when the drone controlling device is attached to such conventional off-the-shelf drones. Such conventional off-the-shelf drones are then transformed into improved IoT assets, which can be remotely activated, tracked even when the drone itself is turned off. The drone that comprises the drone controlling device provides the tremendous possibility of serving diverse applications, examples of which include, but are not limited to package delivery systems, traffic monitoring, agriculture, crowdsensing, environment monitoring, and the like. The drone controlling device further ensures compliance with existing Air Traffic Control (ATC) procedures, communication and network protocols, data routing and security using a mutually synergistic combination of the transponder, the positioning module, the cellular communication module, the one or more data exchange modules, and the power switching unit.

In order to improve the security between the drone controlling device and a ground or an aerial control station, a remote server, a user device or other remote device, the communication between the drone controlling device and corresponding remote device can be encrypted. This enables to avoid third party attacks that may be vulnerable to the drone controlling device. Thus, in the embodiments of the present disclosure the operation system of the drone controlling device is configured to send the data and commands from the drone controlling device to the remote device encrypted or alternatively, the data and commands are encrypted in the remote device. This enables the drone controlling device to be used in e.g., military, border control, surveillance and other applications, which require very high security standards but also in other applications to avoid insecure communications.

The drone controlling device refers to an electronic device that is able to control a drone. The drone controlling device may also be referred to as an Internet-of-drones (IoD) device or an IoD module, more specifically attachable IoD or IoD module. The drone controlling device has an Internet-of-Things (IoT) functionality, which, when applied in the field of drones, can be termed as Internet-of-Drones (IoD).

In an implementation, the drone controlling device is attached to a drone when in operation. In such an implementation, the drone controlling device may be attached to or mounted on a conventional drone to transform the conventional drone into a high-performance drone that manifests reduced energy consumption, improved connectivity with a ground control station, and improved operating lifetime. In another implementation, the drone controlling device is integrated as a hardware module in the drone.

The drone controlling device has a compact form factor. For example, the size of the drone controlling device may be about a size of a smartphone, and may range from 100-150 mm in length, 50-80 mm in width, and depth of 7-40 mm. In an example, the length may be from 100, 110, 120, 130, 140 up to 150 mm, and width may be from 50, 60, 70 up to 80 mm, and depth may be from 7, 12, 17, 22, 27, 32, 37 up to 40 mm. Such compact format of the drone controlling device enables not to burden the drone.

The drone controlling device is connectable to an electrical system of a drone. The electrical system is responsible for providing power to the drone and controls a start and stop mechanism of the drone. Thus, in order to control the power consumption of the drone, the drone controlling device is able to connect and control the electrical system of the drone. Optionally, in some embodiments, the electrical system of the drone comprises a switching unit.

Optionally, the drone controlling device comprises a connection means. The connection means is arranged to allow the drone controlling device to attach to the drone when in operation. The connection means further acts as a support so that the drone controlling device can be adequately connected to the electrical system of the drone. Optionally, the drone controlling device further comprises a housing, where the connection means is arranged on the housing so as to allow the drone controlling device to attach to the drone and also electrically or mechanically connect to the electrical system of the drone. Examples of the connection means includes, but is not limited to a mechanical fastener, such as screws, nuts, and bracket, a metallic slab that can be soldered or welded to the drone body, a gluing pad that sticks to the drone's body, a magnetic fastener, or other types of fasteners.

The drone controlling device comprises a processor and a chargeable battery, a transponder, a positioning module, a cellular communication module, one or more data exchange modules, a power switching unit coupled to the processor and being controlled by the processor. The chargeable battery is arranged to supply power to the drone controlling device for its operation. The chargeable battery is a separate battery from the drone battery in a case where the drone is powered by a battery as at least one power source. In alternative embodiments, the drone controlling device may further include an additional standby battery.

According to the embodiments, the processor is communicatively coupled to various components of the drone controlling device and establishes coordination among the components for the smooth functioning of the drone controlling device. Examples of the implementation of the processor include, but is not limited to an onboard processor, a microprocessor, a microcontroller, an IoT chip, an application-specific integrated circuit (ASIC) processor, a reduced instruction set (RISC) processor, a central processing unit (CPU), a data processing unit, and other processors or circuits.

The transponder being arranged to monitor the surrounding airspace. The transponder of the drone controlling device monitors and detects any aerial vehicles in the surrounding airspace in a specified range. For example, the transponder may detect any aircraft within a range of about 100 km, when such aircraft also have the transponder turned ON at a certain frequency, e.g., at about 1090 MHz. The transponder is arranged to acquire (i.e., grab) any broadcasting messages of the aerial vehicles when such aerial vehicles have a transponder. Such broadcasting messages are then sent back to a remote device, such as a ground or an aerial control station, a remote server, or a user device situated at a remote location and connected to a central control station or server.

The drone controlling device further comprises the positioning module being configured to identify a location of the drone. As the drone controlling device is attached to the drone (or in alternative embodiments integrated to the drone), the position of the drone controlling device is the same as the position of the drone. Beneficially, the location of the drone can be identified even if the drone is turned OFF by the use of the positioning module of the drone controlling device.

According to an embodiment, the positioning module is configured to communicate the location of the drone to the one or more remote devices and comprises at least one of: a global navigation satellite systems module and a satellite communications unit, or alternatively the positioning module is integrated into the processor. The global navigation satellite systems (GNSS) module provides GNSS functionality, which refers to a constellation of satellites providing signals from space that transmit positioning and timing data to the GNSS module to identify the location of the drone controlling device, which is also the location of the drone.

The satellite communications unit allows the drone controlling device before, during or after a flight to send and receive short messages or telemetry data, e.g., real-time flight information, surrounding airspace information and aircraft and other information regarding the drone surrounding areas, health and status data of the drone, weather information, far beyond the reach of wireless-fidelity (Wi-Fi) and cellular networks. In an implementation, the satellite communications unit comprises a satellite communication chip, also called a satcom chip, and its own antenna. The positioning module may also be integrated into the processor as an integrated circuit. The location is transmitted to the one or more remote devices, e.g., the ground control station, a ground-based drone hub, the remote server, or the user device situated at a remote location, via the cellular communication module. Moreover, in the case of a Beyond Visual Line of Sight (BVLOS) drone incident, the positioning module enables to identify the location of the drone remotely, and there is no need to employ manual labour.

The cellular communication module being configured to control the drone by communicating with the remote device and to communicate a location to the remote device. The cellular communication module is configured to communicate (i.e., send or receive) information with the remote device over communication network (e.g., a cellular network, such as Long-Term Evolution (LTE), 5G, etc.). For instance, a user may operate the remote device. The user logins to the remote device and checks the current location of the drone using the remote device (e.g., via the web or an application in the remote device). The cellular communication module provides the location of the drone and other information of the drone to the remote device. The cellular communication module is also configured to receive control information, for example, a control message, from the remote device to enable full remote control, of the drone irrespective of whether the drone is powered OFF or ON.

The one or more data exchange modules being arranged to store at least a unique identification code of the drone and exchange the unique identification code with the remote device. The drone controlling device employs the one or more data exchange modules to share the unique identification code to the remote device when the drone controlling device is within a communication range with a ground-based drone hub or the ground control system. In an example, the unique identification code may be set at the time of manufacture of the drone controlling device, and as the drone controlling device is attached to (or provided in) the drone, the same unique identification code can be easily used to identify the drone uniquely.

The power switching unit being arranged to control the power unit of the drone remotely. The power unit is the power source of the drone, which is remotely controlled based on the control information, such as one or more control messages, received from the remote device. Once the cellular communication unit receives the one or more control messages, the processor processes the control messages to discern the meaning of the control message, i.e., whether the control message is to turn ON or turn OFF the power unit of the drone, or change an operating mode of the drone to a different operating mode. The operating mode is one of: a sleeping mode, an active mode, a fly mode, or other custom operating modes. Accordingly, the processor communicatively coupled to the power switching unit directs the power switching unit to either turn ON or turn OFF the power unit of the drone. The synergistic combination of the power switching unit, the cellular communication unit, and the processor enables a full remote control of the drone while reducing the power consumption of the drone from the power unit without the need of any drone operator in the area where the drone is currently stationed.

Currently, communication with a conventional drone can only be established when the drone is in the powered-on state, which means that there is no way to track the drone when the drone is not in the powered-on state. When the drone is not airborne, the typical option to save power is to switch OFF the drone manually. This requires that the drone operator or somebody else have to be in the same area of the drone to switch the drone OFF after the drone has landed, which is practically not possible most of the time given the number of drones is usually far higher than the number of drone operators. And this becomes a prominent bottleneck in saving of energy, and there is a substantial wastage of energy (e.g., wastage of fuel or battery drainage) even if the drone has performed its task and landed. Now, considering hundreds or thousands of drones being operated, the overall cost of operation and wastage of energy, such as fuel or battery, becomes prohibitively very high. Thus, it becomes really technically challenging as to how to save energy consumption of such drones that are operated by a given entity (e.g., a firm) when the drones are not flying, and how to ensure a full remote control of drones while reducing energy consumption by drones at the same time. Presently, all communications (e.g., GNSS, Radio, or cellular communication, such as via LTE) are only enabled when a conventional drone is turned ON, meaning that there is no way also to track the drone when the drone is not switched ON.

In the present disclosure, by use of the disclosed drone controlling device, even if the drone is in power OFF state, the drone controlling device (attached to the drone or provided as a module in the drone) can communicate via its cellular communication module over a cellular network with the remote device (e.g., the ground-based drone hub or the remote server). As the cellular communication module communicates the location of the drone as soon as the drone has completed its assigned task and landed at the desired or a designated spot, the remote device then sends the control message to the drone controlling device to instruct the drone controlling device to turn OFF the power unit of the drone. Thus, without any delay and any wastage of energy consumption in the drone, based on the control message received from the remote device situated at a remote location from the drone, the power switching unit of the drone controlling device turns OFF the power unit of the drone. Similarly, when it is time to fly for the drone, the user operating the remote device sends another control message to turn ON the drone. Accordingly, the cellular communication module receives the control message, which is then processed by the processor to discern the meaning of the control message, and then the processor directs the power switching unit to turn ON the power unit of the drone, so that the drone is ready to carry on a next assigned task. This enables to save power consumption, increase automation and capability of the drone, increase safety, enable sleep mode functionalities, i.e., standby functionality to switch the drone into "power saving mode" or completely turn OFF the power unit of the drone, and further enable drones to be pre-stationed without a human operator.

In an embodiment the drone controlling device may comprise an IoT chip, which is a processing unit arranged to the board. The IoT chip is an embedded IoT module that supports both global navigation satellite systems (GNSS) and LTE features (e.g., LTE Cat M1, LTE Cat NB2, 3GPP, etc.). The IoT chip is configured to provide data connectivity on LTE networks and optional GNSS function via a GNSS module. The IoT chip may further comprise one or more antenna interfaces to allow it to connect to an antenna for GNSS and LTE connectivity. The IoT chip may also include a Universal Subscriber Identify Module (USIM) interface that has similar functionality of a SIM interface to allow support to a SIM card. An example implementation of the IoT chip may be e.g. an IoT BC68 or BG77 chip. The IoT chip may be managed and flashed via a micro universal serial bus (USB) port. The drone controlling device further comprises a data storage, such as an embedded Multi-Media Controller (eMMC) chip. An operating system is stored in the data storage. The drone controlling device is powered by a battery.

According to an embodiment, the data exchange module comprises a radio frequency identification module, a near field communication module. In an implementation, the data exchange module is selected from a group of: the radio frequency identification module and the near field communication module. Alternatively, in another implementation, the data exchange module of the drone controlling device comprises both the radio frequency identification module (RFID) and the near field communication module.

Optionally, the one or more data exchange modules, in addition to the unique identification code, may also share information about the drone, such as requirements and capabilities of the drone, its make, type, weight and version of components used in the drone, ownership information of drone, and the like. For example, the remote device, such as the ground-based drone hub, may perform a handshake through the one or more data exchange modules to access the information about the drone when the drone controlling device is within the communication range with the ground-based drone hub.

According to an embodiment, the satellite communications unit is arranged to provide the unique identification code and the location of the drone when the cellular communication module is outside a coverage area of a cellular network. In some scenarios, the cellular communication module may be outside the coverage area of the cellular network (e.g., LTE, 5G, and the like), or the drone may be operating in cellular signals denied areas. In such scenarios, instead of the cellular communication module communicating the location of the drone to the remote device, the satellite communications unit acts as a back-up unit to provide the unique identification code and the location of the drone to the remote device. In an implementation, the satellite communications unit comprises its own antenna, through which the unique identification code and the location of the drone can be communicated to the remote device. Thus, in a case where the conventional drone does not have more advanced communications channels, the drone controlling device provides better connectivity using the cellular communication module for radio-only drones to enable unlimited communications range or even the satellite communications unit in the drone controlling device is provided that act as a back-up in-case the drone is operated in cellular signals denied areas or when outside of coverage area of cellular signals. This ensures a reliable, and fail-safe tracking of the drone irrespective of whether the drone itself is switched OFF or ON.

Additionally, in some embodiments in case the drone is out of LTE coverage the drone controlling device is configured to receive a mission message with GPS coordinates to fly to via SatCom. For example, to the nearest LTE covered area.

According to some embodiments, the chargeable battery is chargeable wirelessly by an inductive wireless charging, a far-field wireless charging, a magnetic wireless charging, or a power docking charging. After the drone has performed its assigned task, the drone may land on a ground-based drone hub (i.e., a home station) or any other designated spot. In a case where the ground-based drone hub or the designated spot has a pre-installed wireless charging system, then soon after landing, charging of the chargeable battery of the drone controlling device is resumed. The wireless charging capability increases the autonomy and prolongs the operating time of both the drone controlling device as well as the drone on which it is employed. In an example, the chargeable battery is an onboard battery that provides 1-2 weeks of power coupled with inductive charging capabilities so the drone controlling device can be charged without connecting any cables (which is otherwise hard to automate for charging). In such embodiments the battery may be charged via corresponding charging unit (e.g. an inductive charging unit, far-field charging unit, a magnetic wireless charging unit or a power docking charging unit) connected to the battery.

According to an embodiment, the power switching unit is an electronic switch being electrically connected to a power distribution board of the power unit, and wherein the power unit is a battery, a solar power unit, or an internal combustion unit. In this embodiment, the power switching unit is electronically or electrically connected with the power distribution board of the drone via a conductive medium, such as a metallic wire or any other conductive medium. The power distribution board is responsible for power control and power supply to the power unit, which passes power to the drone for its operation. Thus, when the control message is received from the remote device, the electronic switch either turns ON or turns OFF the power supply from the power distribution board to the power unit thereby saving power consumption at the drone without the need of anyone to approach the drone or be in the area where the drone is placed. In an implementation, the electronic switch is connected with one of the plurality of connector pins, such as general-purpose input-output (GPIO) pins of the GPIO module, of the drone controlling device. In another implementation, the electronic switch is directly coupled to the processor and controlled by the processor. The electronic switch provides electronic switching capabilities to the drone controlling device for turning the drone ON or OFF remotely.

Alternatively, according to another embodiment, the device (i.e., the drone controlling device) further comprises a pulse width modulation module coupled to the processor for controlling the power unit and the power switching unit is a mechanical switch being arranged on the device so that a start-and-stop button of the power unit of the drone is turned ON or OFF mechanically and wherein the power unit is a fuel cell. The pulse width modulation (PWM) module is communicatively coupled with the processor via one of the plurality of connector pins (i.e., GPIO pins) of the GPIO module. The PWM module controls a unit for activating a power supply module, e.g. servo motor, stepper motor, solenoid etc. The speed of the servo motor can be controlled using the pulse width modulation module. In an example, in order to control the speed of the servo motor, the amount of voltage across its terminals may be regulated, which can be achieved using pulse width modulation. The pulse width modulation-based speed control works by driving the servo motor with a series of "ON-OFF" pulses and varying the duty cycle. The PWM module controls the speed of the servo motor by changing or modulating the timing of these pulses, i.e., the longer the pulse is "ON", the faster the motor will rotate and likewise, the shorter the pulse is "ON" the slower the motor will rotate. The servo motor in turn is used to control the fuel cell provided in the drone. The mechanical switch may be a mechanical arm-like structure on the housing of the drone controlling device. The mechanical switch is arranged such that one end of the arm-like structure is attached to the housing and the other end of the arm-like structure can mechanically push the start-and-stop button of the power unit (e.g., the fuel cell) of the drone so that the power unit is turned ON or OFF. The mechanical switch works by receiving instruction from the processor and accordingly moves to push ON or push OFF the start-and-stop button of the power unit. In an example, the mechanical switch may include an actuator that receives a digital signal (i.e., the instruction) from the processor and electrical energy from the chargeable battery and converts the electrical energy into a physical-mechanical movement of the mechanical switch. This has a technical effect of reducing the power consumption of the drone by allowing remote switching of the drone. Moreover, by use of the mechanical switch, even the conventional off-the-shelf drones can be transformed and upgraded to advanced power-efficient drones when the drone controlling device is attached to such conventional off-the-shelf drones. Such conventional off-the-shelf drones are then transformed into improved IoT assets, which can be remotely activated, tracked even when the drone itself is turned OFF.

According to an embodiment, the device further comprises a telemetry module coupled to the processor and being arranged to communicate telemetry data before or during a flight with the one or more remote devices. Examples of telemetry data include but are not limited to real-time flight information, weather information, health information of the drone, the position of the drone, or other data. The telemetry module is used to establish a telemetry connection between the drone controlling device and the one or more remote devices (e.g., the user device, the remote server, a ground control station, the ground-based drone hub, etc.) even when the drone is turned OFF.

According to an embodiment, the device further comprises a plurality of connector pins being arranged to allow one or more components to be communicatively coupled to the processor. The plurality of connector pins is digital signal pins arranged on an integrated circuit or electronic circuit board whose behavior, including whether it acts as input or output, is controllable by a user at run time. An example of the plurality of connector pins is plurality of general-purpose input-output (GPIO) pins, which have no predefined purpose and are used or unused by default. The plurality of connector pins acts as simple and easy connectors to a few of the external components that may be integrated into the drone controlling device. For example, a receiver (Rx), a transmitter (Tx), a pulse width modulation (PWM) module, a ground, and a supply of defined voltage, such as 3.3 V may be connected to the plurality of connector pins. The receiver (Rx) and the transmitter (Tx) are provided in the drone controlling device in a case where a cross-talk to the drone's onboard computer is required or a future upgrade to add another component in the drone controlling device is required. The receiver (Rx) and transmitter (Tx) pins can be a part of UART interface.

According to an embodiment, the device (i.e., the drone controlling device) further comprises a data storage coupled to the processor. The data storage of the drone controlling device is used to store information about the drone. In an implementation, the data storage is an embedded Multi-Media Controller (eMMC) chip. Other examples of the data storage include, but are not limited to a Solid-State Drive (SSD), a flash memory, a read-only memory (ROM), or other computer storage media.

According to an embodiment, the transponder is an automatic dependent surveillance-broadcast (ADS-B) transponder. When the drone controlling device is in operation, the ADS-B of the drone controlling device provides a one-way broadcast of its identity and position enabling the drone to be tracked. The broadcast can be received even by other aircraft to provide situational awareness and allow self-separation. Alternatively, and optionally, the transponder is an Automatic Dependent Surveillance-Contract (ADS-C) transponder. The ADS-C is a two-way system that provides comprehensive information related to flight safety to the remote device. The transponder data can be grabbed by the drone controlling device and forwarded by the drone controlling device to the server. The server can poll flight map for the coordinate the drone controlling device is reporting.

According to an embodiment, the electrical system comprises a power unit or a switching unit of the drone. The power unit is a power source, which passes power to the drone. The power unit of the drone is at least one of: a fuel cell, a drone battery, an internal combustion unit, or other power sources, such as a solar power unit, or a combination thereof. The switching unit refers to an ON or OFF mechanism, e.g., a start-stop button of the drone or the power unit itself. In such an embodiment, the drone controlling device is connectable to the power unit or to the switching unit of the electrical system of the drone.

In another aspect, the present disclosure also provides a drone comprising the drone controlling device. In an implementation, the drone controlling device is integrated as a hardware module in a drone at the time of manufacturing of the drone. In another implementation, the drone is removably attached or mounted to a drone. In other words, the drone controlling device can be easily installed or mounted in the drone at the time of manufacturing or later. The drone controlling device improves the functioning of the drone to a high-performance drone that manifests reduced energy consumption, improved and reliable connectivity with a ground control station, and improved operating lifetime.

In another implementation, the drone controlling device may be used, e.g., for asset tracking. For example, the drone controlling device may be mounted or attached to any aerial vehicles, land-based vehicles (e.g., cargo trucks, freight trains, autonomous vehicles etc.) or water-based vehicles (e.g., ships) for easy and all-weather fail-safe tracking of the valuable assets. Various embodiments and variants disclosed above apply mutatis mutandis to the drone.

### DETAILED DESCRIPTION OF THE DRAWINGS

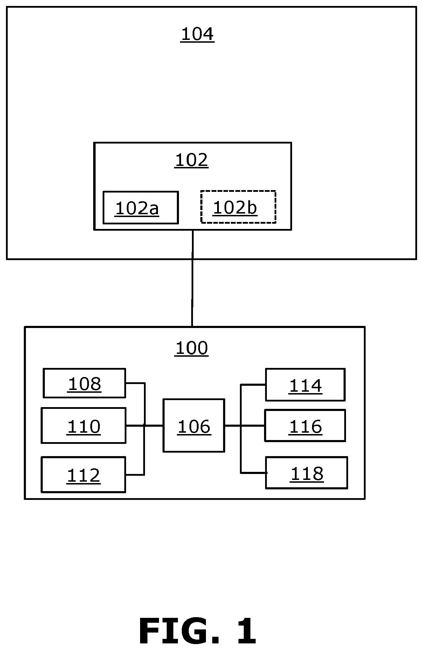

Referring to FIG. 1, illustrated is a block diagram of components of a drone controlling device **100** along with a drone, in accordance with an embodiment of the present disclosure. The drone controlling device **100** is connected to an electrical system **102** of a drone **104.** The drone controlling device **100** comprises a processor **106,** a chargeable battery **108,** a transponder **110,** a positioning module **112,** a cellular communication module **114,** one or more data exchange modules **116,** and a power switching unit **118.** In this embodiment, the electrical system **102** comprises at least a power unit **102a.**

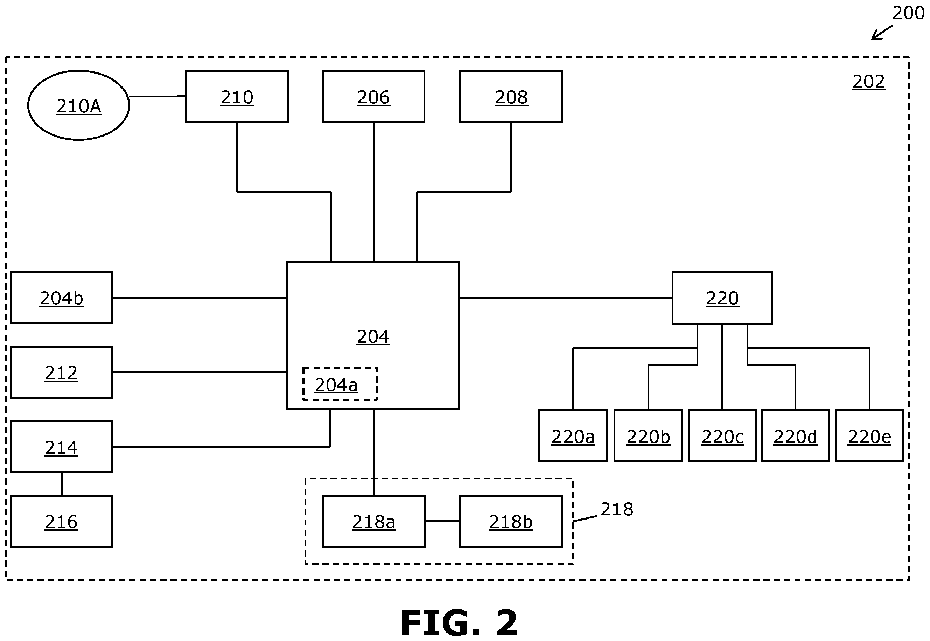

Referring to FIG. 2, illustrated is a block diagram of components of a drone controlling device **200,** in accordance with another embodiment of the present disclosure. In FIG. 2, a layout of various components of the drone controlling device **200** arranged on a board **202,** such as a printed circuit board. In this embodiment, the drone controlling device **200** comprises an IoT chip **204,** which is a processing unit arranged in the center of the board **202.** The IoT chip **204** is an embedded IoT module that supports both global navigation satellite systems (GNSS) and LTE features (e.g., LTE Cat M1, LTE Cat NB2, 3GPP, etc.). The IoT chip **204** provides data connectivity on LTE networks and provides optional GNSS function via a GNSS module **204a.** The IoT chip **204** further comprises one or more antenna interfaces to allow it to connect to an antenna **204b** for GNSS and LTE connectivity. The IoT chip **204** also includes a Universal Subscriber Identify Module (USIM) interface that has similar functionality of a SIM interface to allow support to a SIM card. An example implementation of the IoT chip **204** may be an IoT BG77 or BC 68 chip. The drone controlling device **200** further comprises a data storage **208,** such as an embedded Multi-Media Controller (eMMC) chip. The drone controlling device **200** is powered by a battery **210.** In this embodiment, the battery **210** is charged via an inductive charging unit **210A** connected to the battery **210,** as shown.

The drone controlling device **200** further comprises a radio frequency identification module **212** connected to the IoT chip **204** so once the drone controlling device **200** is within a communication range of a ground-based drone hub, the drone controlling device **200** can be uniquely identified with a unique identification code preset in the drone controlling device **200.** As the drone controlling device **200** is attached to the drone, the unique identification code can be used to identify the drone uniquely. In other words, the unique identification code can be considered the unique ID of the drone.

The drone controlling device **200** further comprises an automatic dependent surveillance-broadcast (ADS-B) transponder **214** for monitoring the current airspace and grabbing any aerial vehicle broadcasting messages via an antenna **216** of the ADS-B transponder **214.** This information is sent back to a remote device, such as a remote server, via the cellular communication module or via SatCom. The drone controlling device **200** further comprises a satellite communications unit **218** that includes a satellite communication chip **218a** and an antenna **218b.** The satellite communications unit **218** is employed to provide the unique identification code and the location of the drone when the drone controlling device **200** is outside a coverage area of a cellular network, such as the LTE. This is very useful in case the drone crashes outside of the cellular network coverage.

The drone controlling device **200** further comprises a plurality of connector pins **220** that are arranged to allow one or more external components to be communicatively coupled to the IoT chip **204.** In this case, the plurality of connector pins **220** refers to general purpose input-output (GPIO) pins, which act as simple and easy connectors to a few of the external components or devices. For example, a receiver (Rx) **220a,** a transmitter (Tx) **220b,** a pulse width modulation (PWM) module **220c,** a ground **220d,** and a 3.3-volt supply **220e** may be connected to the plurality of connector pins **220.** The receiver (Rx) **220a** and the transmitter (Tx) **220b** are used in the case where a cross-talk to the drone's onboard computer is required or a future upgrade to add another component in the drone controlling device **200** is required. The connector pin associated with the PWM module **220c** is used to control a servo motor (provided in the drone) that starts a fuel cell of the drone. Thus, additional components, devices, or accessories may be soldered on the board **202** and may be connected with the IoT chip **204** via the plurality of connector pins **220.** The various antennas (e.g., the antennas **204b, 216,** and **218b**) are used for the GNSS module **204a** (and for the cellular connectivity, such as LTE connectivity), the ADS-B transponder **214,** and the satellite communications chip **218a,** respectively.

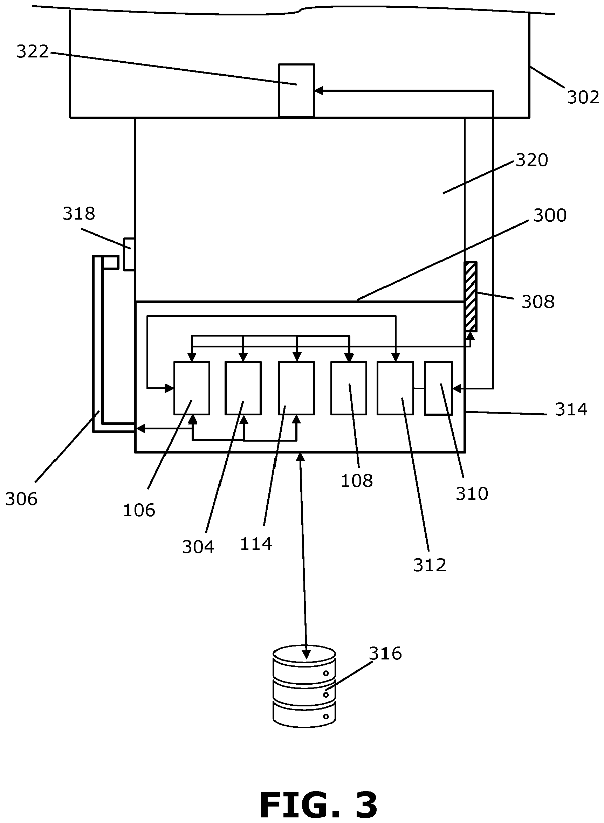

Referring to FIG. 3, illustrated is a diagram of components of a drone controlling device **300** that is attached to a drone **302,** in accordance with yet another embodiment of the present disclosure. In this embodiment, the drone controlling device **300** further comprises a telemetry module **304,** a mechanical switch **306,** a connection means **308,** a PWM module **310,** a GPIO module **312** in addition to the processor **106,** the chargeable battery **108,** and the cellular communication module **114** arranged in a housing **314,** as shown. The telemetry module **304** is coupled to the processor **106** and is arranged to communicate telemetry data, e.g., real-time flight information, weather information, or other telemetry data, before or during a flight with one or more remote devices, such as a remote server **316.** In this embodiment, the power switching unit is the mechanical switch **306** coupled to the processor **106** so that a start-and-stop button **318** of a power unit **320** of the drone **302** is turned ON or OFF mechanically. In this case, the power unit **320** is a hydrogen Proton-exchange membrane fuel cell (H2 PEM FC). The start-and-stop button **318** is remotely turned OFF or ON based on one or more control messages (i.e., start and stop relay information) received from the remote server **316.**

As shown, the power unit **320** is attached to the bottom of the drone **302** and the drone controlling device **300** itself is attached to the unit for activating the power unit **320,** e.g. a fuel cell, using the connection means **308.** The PWM module **310** is communicatively coupled to the processor **106** via a GPIO pin of the GPIO module **312,** for controlling the power unit **320.** Alternatively stated, the PWM module **310** controls the power unit.

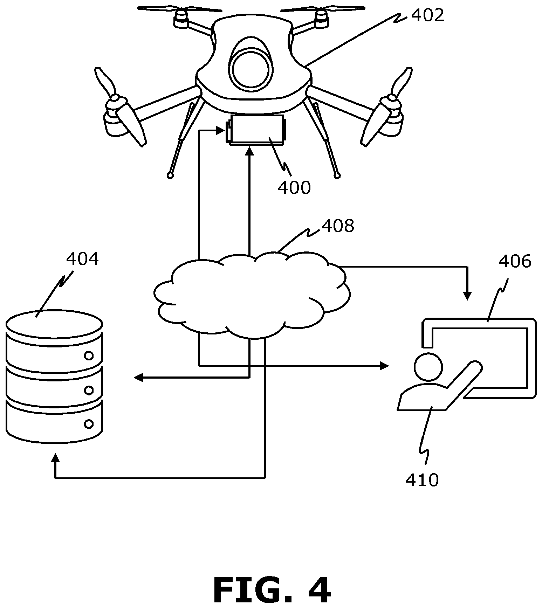

Referring to FIG. 4, illustrated is an exemplary scenario of implementation of a drone controlling device **400** for a drone **402,** in accordance with an embodiment of the present disclosure. In this embodiment, the drone controlling device **400** is implemented in the form of an IoD device (also called IoD module) that is attached to the drone **402.** The drone controlling device **400** is connected to an electrical system of the drone **402,** and is configured to wirelessly communicate with a remote server **404** and via the remote server with a user device **406** or directly with the user device **406,** over a communication network **408.** The user device **406** is associated with a user **410.** In this exemplary scenario, the user **410** may operate the user device **406** to communicate with the drone controlling device **400** over the communication network **408,** e.g., an LTE cellular network. The user **410,** by using the user device **406,** may remotely track and identify that the drone **402** has returned to a ground-based drone hub (home station) after completing its assigned task of a delivery of a product to a designated location. Thus, the user **410** may provide an input to the user device **406** to send a control message to turn OFF the power unit of the drone **402** remotely. The drone controlling device **400** receives the control message using its cellular communication module, and the processor of the drone **402** processes the control message, and instructs the power switching unit of the drone controlling device **400** to turn OFF the power unit (e.g., a battery or a fuel cell) of the drone **402.** The user device **406** may be used to communicate with the drone controlling device **400** directly or may communicate via the remote device **404.** Various information regarding the drone surrounding areas, such as weather in the area, or presence of other aircraft, or telemetry data, can be accessed by the user device **406** from the remote device **404,** such as a cloud server. Such information may be shared by the drone controlling device **400** even if the drone **402** is turned OFF, so that a next mission for the drone **402** may be planned while reducing the power consumption, increasing autonomy, and operating lifetime of the drone **402.**

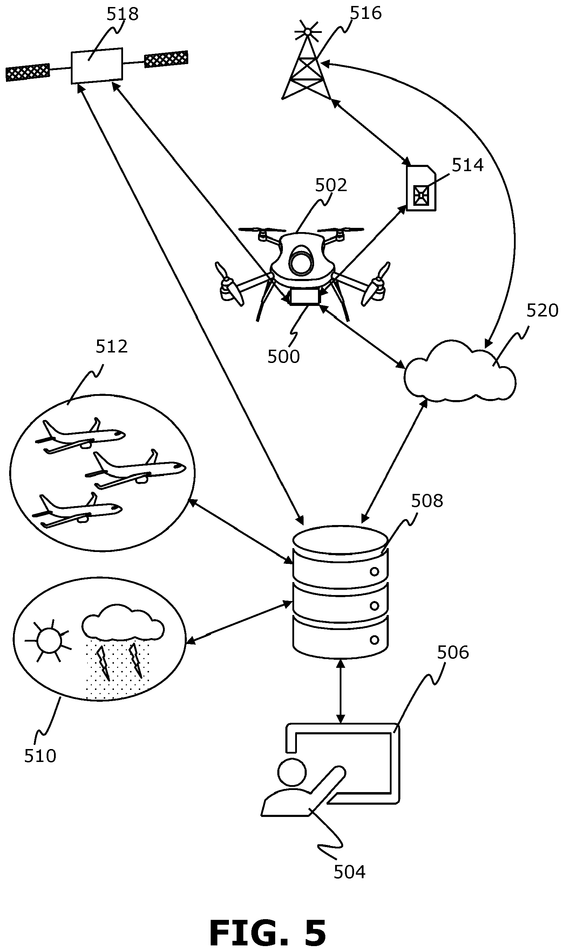

Referring to FIG. 5, illustrated is another exemplary implementation of a drone controlling device **500** for a drone **502,** in accordance with another embodiment of the present disclosure. In this embodiment, the drone controlling device **500** is implemented in the form of an attachable IoD module that can be attached to the drone **502** (e.g., an off-the-shelf drone). In this exemplary scenario, a user **504** logs into a system, e.g., a website, or an application, on a user device **506,** and checks where the drone **502** is currently located (e.g., in the forest, on the roof, in home drone station etc.). The user device **506** is communicatively coupled to a remote server **508.** The system retrieves information from the remote server **508,** and provides an overview of weather information **510** in the area of the drone **502,** airspace information **512** about the presence or absence of any manned aircraft is in the same airspace, key telemetry data, and other information about the drone **502.** If all conditions permit operations of the drone **502,** the user **504** can turn ON the drone **502** to activate all the key systems, such as the power unit, of the drone **502.** The user **504** can then proceed to use a preferred Ground Control System (GCS) to enter the required mission parameters and launch the drone **502** remotely. Once the mission is completed, the drone **502** returns to a drone home station or a designated spot, and the drone controlling device **500** can be used to turn OFF the drone **502** again sending it essentially to zero energy consumption standby mode. In a case where the designated spot is a "base or drone hub" like location, then the installed wireless charging system in such designated spot will also begin charging the chargeable battery of the drone controlling device **500.**

The drone controlling device **500** comprises an interface to support a subscriber identify module (SIM) card **514** to enable cellular connectivity (e.g., an LTE connectivity) using a cellular base station **516.** The drone controlling device **500,** which is attached to the drone **502,** is also able to perform satellite communication (represented by a satellite **518**) using its satellite communication unit. There is also shown a communication network **520** through which the drone controlling device **500,** the remote server **508,** and the cellular base station **516** is communicatively coupled with each other (e.g., via Internet connectivity or cloud communications).

Beneficially, the drone controlling device **500** provides standby functionality and remote operations (start-stop, simple telemetry), a start-stop trigger mechanism provided by a power switching unit, such as a mechanical switch or the electronic switch, to launch the start-up protocols of the drone **502.** The drone controlling device **500** further has the function to cut-off the fuel cell connection to a hybrid battery of the drone (there's usually a low power draw when they are left connected for a prolonged period of time). The drone controlling device **500** further enables LTE connectivity, near-field communication and data exchange, weather data controlling, mechanical or digital switching to turn the sleep mode of the drone on/off, and telemetry functionality. The drone controlling device **500** does not use much power and operates at low power consumption and maintains the "standby" function. These functionalities enable to save power consumption, increase automation and capability of the drone, increase safety, enable sleep mode functionalities, i.e., standby functionality to switch the drone into "power saving mode", and lastly enable drones to be pre-stationed without a human operator.

It may be understood by a person skilled in the art that the embodiments shown in figures FIG. 1-FIG. 5 are merely an exemplary embodiments, which should not unduly limit the scope of the claims herein. The person skilled in the art will recognize many variations, alternatives, and modifications of embodiments of the present disclosure. Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A drone controlling device (100, 200, 300, 400, 500), the drone controlling device being connectable to an electrical system (102) of a drone (104, 302, 402, 502), the drone controlling device comprises:
- a processor (106) configured to control: a chargeable battery (108), a transponder (110), a positioning module (112), a cellular communication module (114), one or more data exchange modules (116) and a power switching unit (118)
wherein when the drone controller device is in use:
- the transponder being arranged to monitor surrounding airspace and collect information;
- the positioning module being configured to identify a location of the drone;
- the one or more data exchange modules arranged to read at least a unique identification code of the drone;
- the cellular communication module configured to provide communication between the drone controlling device and one or more remote devices and to communicate the location of the drone, the unique identification code and information from the transponder to the one or more remote devices; and
- the power switching unit being arranged to control a power unit (102a) of the electrical system of the drone based on the communication from the one or more remote devices.

2. The device (100, 200, 300, 400, 500) according to claim 1, wherein the positioning module (112) is configured to communicate the location of the drone (104, 302, 402, 502) to the one or more remote devices (404) and comprises at least one of: a global navigation satellite systems module (204a) and a satellite communications unit (218), or the positioning module is integrated into the processor (106).

3. The device (100, 200, 300, 400, 500) according to claim 1 or 2, wherein the data exchange module (116) is selected from a group of: a radio frequency identification module (212) and a near field communication module.

4. The device (100, 200, 300, 400, 500) according to any of the preceding claims 2 or 3, wherein the satellite communications unit (218) is arranged to provide the unique identification code and the location of the drone (104, 302, 402, 502) when the cellular communication module (114) is outside a coverage area of a cellular network.

5. The device (100, 200, 300, 400, 500) according to any of the preceding claims, wherein the chargeable battery (108) is chargeable by an inductive wireless charging, a far-field wireless charging, a magnetic wireless charging, or a power docking charging.

6. The device (100, 200, 300, 400, 500) according to any of the preceding claims, wherein the power switching unit (118) is an electronic switch being electrically connected to a power distribution board of the power unit (102a), and wherein the power unit is a battery, a solar power unit, or an internal combustion unit.

7. The device (100, 200, 300, 400, 500) according to any of the claims 1-5, wherein
- the device further comprises a pulse width modulation module (220c, 310) coupled to the processor (106) for controlling the power unit (102a) and
- the power switching unit (118) is a mechanical switch (306) being arranged on the device so that a start-and-stop button (318) of the power unit (102a) of the drone (104, 302, 402, 502) is turned ON or OFF mechanically and wherein the power unit is a fuel cell (320).

8. The device (100, 200, 300, 400, 500) according to any one of the preceding claims, wherein the device further comprises a telemetry module (304) coupled to the processor (106) and being arranged to communicate telemetry data before or during a flight with the one or more remote devices (404).

9. The device (100, 200, 300, 400, 500) according to any of the preceding claims, wherein the device further comprises a plurality of connector pins (220) being arranged to allow one or more components to be communicatively coupled to the processor (106).

10. The device (100, 200, 300, 400, 500) according to any of the preceding claims, wherein the device further comprises a data storage (208) coupled to the processor (106).

11. The device (100, 200, 300, 400, 500) according to any of the preceding claims, wherein the transponder (110) is an automatic dependent surveillance-broadcast transponder (214).

12. The device (100, 200, 300, 400, 500) according to any of the preceding claims, wherein the drone controlling device is connectable to the power unit (102a) or to a switching unit (102b) of the electrical system (102) of the drone (104, 302, 402, 502).

13. A drone (104, 302, 402, 502) comprising the drone controlling device (100, 200, 300, 400, 500) according to any of the claims 1-12.
